# EUROPÄISCHE PATENTSCHRIFT

(11) **EP 3 889 473 B1**
(45) Veröffentlichungstag und Bekanntmachung des Hinweises auf die Patenterteilung: **06.11.2024**
(21) Anmeldenummer: 21165749.9
(22) Anmeldetag: 30.03.2021
(51) Int. Cl.: F16J 15/08

(54) **ZYLINDERKOPFDICHTUNG**
CYLINDER HEAD SEAL
JOINT D'ÉTANCHÉITÉ DE CULASSE

(30) Priorität: 31.03.2020 DE 202020101730 U
(43) Veröffentlichungstag der Anmeldung: 06.10.2021
(73) Patentinhaber: REINZ-Dichtungs-GmbH, 89233 Neu-Ulm (DE)
(72) Erfinder: SALZMANN, Jochen, 89233 Neu-Ulm (DE); WALDVOGEL, Johann, 86381 Krumbach (DE)
(74) Vertreter: Pfenning, Meinig & Partner mbB

(56) Entgegenhaltungen:
- EP-A1- 0 041 906
- EP-A1- 2 905 515
- EP-A1- 3 361 080
- DE-A1- 3 509 136
- US-A- 4 312 512
- US-A- 4 976 225

## Beschreibung

Die vorliegende Erfindung betrifft eine Zylinderkopfdichtung.

Zylinderkopfdichtungen werden in Verbrennungsmotoren von Kraftfahrzeugen eingesetzt. Für derartige Verbrennungsmotoren und Zylinderkopfdichtungen gibt es unterschiedliche Bauformen. Beispielsweise können Zylinderkopfdichtungen derart ausgestaltet sein, dass sie in einer ihrer Lagen um die Brennraumdurchgangsöffnungen umlaufende Dichtstrukturen, beispielsweise Dichtsicken, aufweisen. Derartige Dichtstrukturen können jedoch auch in eigenen Inserts ausgebildet werden, die in die Brennraumdurchgangsöffnungen einer der Lagen einer Zylinderkopfdichtung eingesetzt werden. Dazu ist die Durchgangsöffnung in der Lage der Zylinderkopfdichtung mit einem größeren Radius als der Brennraum versehen, sodass zusätzlich das ringförmig um den Brennraum umlaufende Brennrauminsert in die Zylinderkopfdichtung einsetzbar ist. Zwischen dem Brennrauminsert und der umgebenden Lage der Zylinderkopfdichtung entsteht ein geringer Spalt. In diesen Spalt können Schleichgase vom Brennraum übergehen. Diese Schleichgase können sich zusätzlich in die Räume zwischen der Zylinderkopfdichtung und dem Motorblock bzw. zwischen der Zylinderkopfdichtung und dem Zylinderkopf ausdehnen und so im Bereich der Zylinderkopfdichtung vorhandene Elastomerabdichtungen beschädigen. Insbesondere können die Elastomerdichtungen, die im sogenannten Hinterland einer Zylinderkopfdichtung, d.h. entfernt von den Brennraumdurchgangsöffnungen, beispielsweise an Nebendurchgangslöchern der Zylinderkopfdichtung, wie beispielsweise für Kühlwasser, Öl, Ölrückführung oder Schrauben, oder am Außenrand einer Lage der Zylinderkopfdichtung angeordnet sind, von der Lage der Zylinderkopfdichtung abgelöst werden und beispielsweise in die jeweiligen Öffnungen eingedrückt werden.

Da die Schleichgase als Verbrennungsgase eine hohe Temperatur aufweisen, können die Elastomerdichtungen im Hinterland der Zylinderkopfdichtung auch durch die hohe Temperatur der Schleichgase beschädigt werden. Sind die Elastomerdichtungen der Zylinderkopfdichtung beschädigt, so können die Schleichgase, also Verbrennungsgase, in die jeweiligen Kanäle/Durchgangsöffnungen eindringen und die darin geführten Fluide verunreinigen. Sind die Elastomerdichtungen, die längs der Außenkante der Zylinderkopfdichtung umlaufen, beschädigt, so können die Schleichgase auch unkontrolliert in die Umwelt gelangen.

Die EP 0 041 906 A1 zeigt eine Zylinderkopfdichtung für einen Verbrennungsmotor mit einer Lage aus einem stabilen Polymer. Dieser Polymerlage ist auf der Seite des Brennraums ein metallischer Dichtring vorgelagert, der eine um den Brennraum umlaufende Dichtsicke aufweist. Zwischen dem metallischen Dichtring und der Polymerlage der Zylinderkopfdichtung können Verbrennungsgase eintreten, die über einen geradlinigen Kanal in der Polymerlagen aus diesem Zwischenbereich abgeführt werden können.

Die US 4 312 512 A offenbart eine Zylinderkopfdichtung, die im Wesentlichen aus drei dünnen metallischen Schichten, die benachbart zueinander angeordnet sind, besteht. Auf der Seite einer Zylinderbohrung ist in die Zylinderbohrung ein metallischer Dichtring eingesetzt, so dass sich zwischen dem metallischen Dichtring und der dreilagigen Foliendichtung ein kreisförmiger Gaskanal ergibt. Das in diesen kreisförmigen Kanal übertretende Gas wird über einen Schlitz in der zentralen Folie der dreilagigen Foliendichtung ausgeleitet.

Die DE 3 509 136 A1 offenbart eine Zylinderkopfdichtung, die ein glattes Trägerblech aufweist, das beidseitig mit jeweils einer Weichstoffschicht beschichtet ist. In den Brennraumöffnungen sind Brennraum-Dichtelemente in ringförmiger Weise angeordnet. Zwischen diesen Dichtelementen und der Zylinderkopfdichtung entsteht ein Spalt, in den Brennraumgase übertreten können. Diese Brennraumgase werden über Kanäle in den beiden Weichstoffschichten auf der metallischen Trägerlage zum Rand der Dichtungsplatte ausgeleitet.

Aufgabe der vorliegenden Erfindung ist es daher, eine Zylinderkopfdichtung zu schaffen, bei der Schleichgase am unkontrollierten Übertritt in den Spalt zwischen der Lage der Zylinderkopfdichtung und dem Motorblock bzw. dem Zylinderkopf gehindert werden.

Diese Aufgabe wird durch die Zylinderkopfdichtung nach Anspruch 1 gelöst. Vorteilhafte Weiterbildungen der erfindungsgemäßen Zylinderkopfdichtung werden in den abhängigen Ansprüchen gegeben.

Die erfindungsgemäße Zylinderkopfdichtung weist mindestens eine Lage, bei einer einlagigen Zylinderkopfdichtung auch Trägerlage genannt, auf, in der sich mindestens eine Durchgangsöffnung für einen Verbrennungsraum befindet. Es ist jedoch auch möglich, weitere Lagen benachbart zu der Trägerlage anzuordnen. Es handelt sich beispielsweise um eine Einzylinderdichtung oder auch um eine Zylinderkopfdichtung für mehrere benachbart zueinander angeordnete Verbrennungsräume.

Die Zylinderkopfdichtung weist weiterhin ein um die Verbrennungsräume geschlossen umlaufendes Brennraumabdichtelement auf, das als Brennrauminsert in die Brennraumdurchgangsöffnung in der Zylinderkopfdichtung eingesetzt wird und die Brennräume nach außen abdichtet.

Bei der vorliegenden erfindungsgemäßen Zylinderkopfdichtung kann für jede einzelne Brennraumdurchgangsöffnung ein eigenes Insert vorgesehen sein oder auch für mehrere benachbarte Brennraumdurchgangsöffnungen ein gemeinsames Brennrauminsert eingesetzt werden. In letzterem Falle kann das Brennraumabdichtelement in Form einer Brille mit beispielsweise zwei Durchgangsöffnungen oder mehr Durchgangsöffnungen ausgestaltet sein. Dabei müssen jedoch die in die Brille geprägten Dichtstrukturen jeweils in sich geschlossen um eine Brennraumdurchgangsöffnung umlaufende Dichtstrukturen enthalten, um jeden Brennraum für sich abzudichten.

Erfindungsgemäß sind die Trägerlage und das Brennraumabdichtelement so ausgestaltet, dass zwischen dem Brennraumabdichtelement und der Trägerlage umlaufend um die mindestens eine Durchgangsöffnung für einen Verbrennungsraum ein Spalt ausgebildet wird. Der Spalt kann sich über einen Abschnitt des Umfangs der Durchgangsöffnung erstrecken oder auch vollständig um die Durchgangsöffnung erstrecken. Er kann auch durch Stege unterbrochen sein, mit denen das Brennraumabdichtelement an der umgebenden Trägerlage festgelegt wird. Erfindungsgemäß ist der Spalt gezielt gestaltet, da er bei der vorliegenden Erfindung als Aufnahmeraum für die Schleichgase dient.

Vorteilhafterweise weist einer, mehrere oder sämtliche der Spalte zwischen einem Brennraumabdichtelement und der Trägerlage eine Mindestweite von 500 µm, vorteilhafterweise mindestens 1400 µm, vorteilhafterweise 3000 µm, auf. Diese Mindestweite muss zumindest in Abschnitten, vorteilhafterweise auf mehr als der Hälfte der Länge, vorteilhafterweise auf mindestens 80 % der Länge der Spalte oder ihrer Abschnitte vorliegen.

Erfindungsgemäß ist nun die Trägerlage so ausgebildet, dass sie einen nutförmigen Kanal aufweist, der sich von mindestens einem der Spalte zwischen der Trägerlage und einem Brennraumabdichtelement bis zur Außenkante der Trägerlage erstreckt. Durch diesen Kanal werden nun Schleichgase, die in den Spalt zwischen dem Brennraumabdichtelement und der Trägerlage eindringen, bis zur Außenkante der Trägerlage geführt und von dort in die Umwelt entlassen. Wesentlich ist also, dass durch den Kanal der Druck in dem Spalt, der durch die in den Spalt zwischen Brennraumabdichtelement und Trägerlage eindringenden Schleichgase aufgebaut würde, reduziert wird. Damit wird verhindert, dass die Schleichgase von dem Spalt zwischen dem Brennraumabdichtelement und der Trägerlage in den flächigen Spalt zwischen der Trägerlage und dem Motorblock bzw. dem Zylinderkopf eindringen und so in das Hinterland der Zylinderkopfdichtung gelangen und dort an den dort befindlichen Elastomerdichtungen Schäden verursachen oder in die dort befindlichen Fluidbohrungen eindringen.

Durch die Ausgestaltung des Kanals, insbesondere seinen Querschnitt und seine Länge zwischen dem Spalt zwischen dem Brennraumabdichtelement und der Trägerlage und der Außenkante der Trägerlage, kann die Druckentlastung sowie die Menge an zur Außenkante geführten Schleichgasen eingestellt werden. Dadurch, dass die Schleichgase nunmehr gezielt über Kanäle abgeführt werden, kann außerdem der Ort bestimmt werden, an dem die Schleichgase aus dem Spalt zwischen Motorblock und Zylinderkopf austreten.

Der erfindungsgemäße Kanal ist nutförmig ausgestaltet. Dies bedeutet, dass der Kanal in die Trägerlage eingepresst sein kann, so dass die stoffliche Kontinuität der Trägerlage in der Hauptlagenebene der Trägerlage und quer zur Erstreckungsrichtung des Kanals nicht unterbrochen wird. Wird der Kanal in einer weniger bevorzugten Variante in die Trägerlage eingeprägt, so entsteht eine Sicke, wobei die durch die Sicke auf der dem Kanal gegenüberliegenden Oberfläche der Trägerlage entstehende Aufwölbung der Lage gegebenenfalls durch weitere Maßnahmen ausgeglichen werden muss. In einer bevorzugten Variante wird der Kanal jedoch in die Trägerlage so eingeformt, dass dort die Dicke der Trägerlage verringert wird und die dem Kanal gegenüberliegende Oberfläche der Lage nicht umgeformt wird. Der Kanal bildet dadurch eine Nut, die entsprechend ihrer Tiefe und Breite einen an die jeweiligen Erfordernisse anpassbaren Querschnitt aufweist.

Vorteilhafterweise sind für jedes Brennrauminsert ein eigener Kanal oder mehrere Kanäle vorgesehen. Es ist jedoch auch möglich, lediglich eine geringe Anzahl an Kanälen, gegebenenfalls auch nur einen einzigen oder wenige erfindungsgemäße Kanäle vorzusehen, die sich von einem der Spalte zwischen den Brennraumabdichtelementen und den Brennraumdurchgangsöffnungen einer Zylinderkopfdichtung bis zur Außenseite der Zylinderkopfdichtung erstrecken. Zur Entlüftung weiterer Spalte zwischen Brennraumabdichtelementen und Durchgangsöffnungen für Verbrennungsräume können diese Spalte untereinander verbunden sein. Dadurch ist es möglich, auch weitere Spalte zwischen Brennraumabdichtelementen und Durchgangsöffnungen für Verbrennungsräume letztlich über den einen oder die mehreren Kanäle zu entlüften, die sich bis zur Außenkante der Zylinderkopfdichtung erstrecken.

Je nach Erfordernissen können die erfindungsgemäßen Kanäle zwischen dem Spalt und der Außenkante der Trägerlage geradlinig oder auch gekrümmt, ein- oder mehrfach gekrümmt, insbesondere geknickt oder anderweitig verlaufen.

Als besonders vorteilhaft hat sich ergeben, wenn mindestens einer der erfindungsgemäßen Kanäle zwischen Spalten oder zwischen dem Spalt und der Außenkante der Trägerlage keine weiteren Öffnungen oder Vertiefungen in der Trägerlage berühren oder durch diese hindurchgehen. Dies betrifft insbesondere Durchgangsöffnungen für Kühlflüssigkeit, Öl, Ölrücklauf oder Schrauben in der Zylinderkopfdichtung. Gegebenenfalls werden der eine, die mehreren oder sämtliche der Kanäle um derartige Öffnungen herumgeführt.

Besonders vorteilhaft ist hier nun, wenn einer, mehrere oder sämtliche der Kanäle zwischen den Spalten oder zwischen dem Spalt und der Außenkante der Trägerlage ausschließlich in ansonsten nicht umgeformten Bereichen der Trägerlage verlaufen, d. h. mit Ausnahme der Umformung der Ausbildung eines Kanals der jeweilige Kanal ausschließlich durch Bereiche der Trägerlage verläuft, in denen diese als nicht umgeformtes Blech, insbesondere als Glattblech ausgebildet ist.

Im Folgenden werden einige Beispiele erfindungsgemäßer Zylinderkopfdichtungen gegeben. Dabei werden in sämtlichen Figuren für gleiche oder ähnliche Elemente gleiche oder ähnliche Bezugszeichen verwendet, sodass deren Wiederholung in den Figuren oder der Beschreibung gegebenenfalls weggelassen wird.

Die folgenden Beispiele zeigen Beispiele von erfindungsgemäßen Zylinderkopfdichtungen, die jeweils eine Vielzahl von optionalen Merkmalen zusätzlich zu den für die vorliegende Erfindung wesentlichen Merkmalen verwirklichen. Es ist jedoch auch möglich, diese optionalen Merkmale jeweils einzeln oder auch in beliebten Kombinationen aus demselben Beispiel oder aus verschiedenen Beispielen gemeinsam mit den wesentlichen Merkmalen der vorliegenden Erfindung zu verwirklichen.

Es zeigen
- Fig. 1: eine erfindungsgemäße Zylinderkopfdichtung;
- Fig. 2: eine weitere erfindungsgemäße Zylinderkopfdichtung;
- Fig. 3: weitere erfindungsgemäße Zylinderkopfdichtungen.

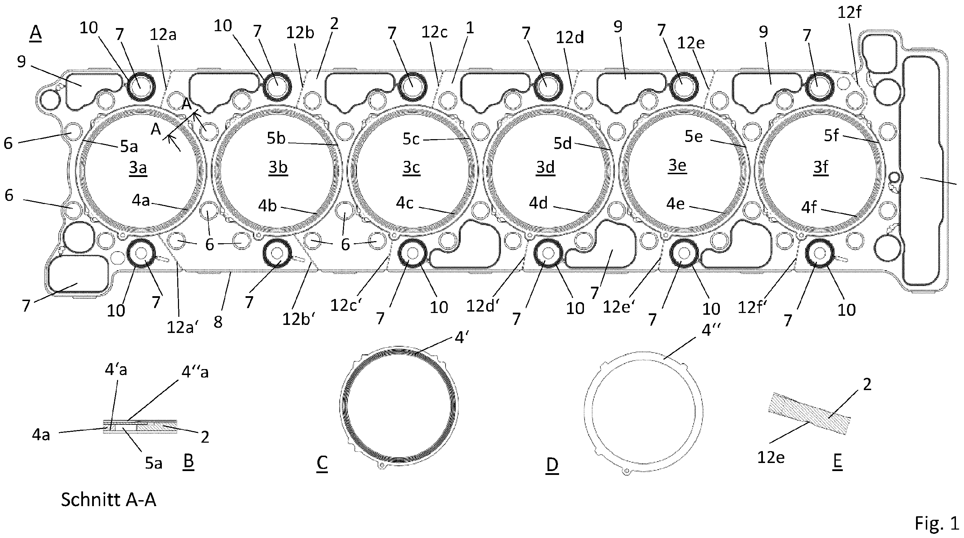

Figur 1 zeigt eine Zylinderkopfdichtung 1 mit einer Trägerlage 2. Die Zylinderkopfdichtung 1 weist nur diese einzige Trägerlage 2 auf und ist daher eine Einlagendichtung. Prinzipiell sind jedoch auch Mehrlagendichtungen erfindungsgemäß herstellbar.

Die Trägerlage 2 weist im vorliegenden Beispiel insgesamt sechs Durchgangsöffnungen 3a' - 3f' (im folgenden auch generalisierend mit dem Bezugszeichen 3' bezeichnet) auf, die in Form eines Reihen-Sechszylindermotors getrennt voneinander in der Trägerlage 2 ausgebildet sind. Die Durchgangsöffnungen 3a' - 3f' sind mit einem größeren Durchmesser versehen als die benachbarten Brennraumbohrungen im Zylinderurbelgehäuse. In die Durchgangsöffnungen 3a' - 3f' sind Brennraumabdichtelemente 4a - 4f (im Folgenden auch generalisierend mit dem Bezugszeichen 4 bezeichnet) eingesetzt, die ihrerseits Brennraumdurchgangsöffnungen 3a - 3f aufweisen (im Folgenden auch generalisierend mit dem Bezugszeichen 3 bezeichnet). Sie sind als sogenannte Inserts ausgestaltet, die Dichtstrukturen aufweisen, um zwischen den Brennraumdurchgängen 3a - 3f und der Trägerlage 2 abzudichten. Diese Brennrauminserts 4a - 4f werden im montierten Zustand ebenfalls zwischen Zylinderkopf und Motorblock eingespannt.

Figur 1A zeigt im Überblick eine derartige Trägerlage 2 einer Zylinderkopfdichtung 1, während die Figuren 1B - 1E Einzelheiten dieser Zylinderkopfdichtung 1 darstellen. Figur 1C und Figur 1D zeigen die beiden Lagen eines Brennrauminserts 4, nämlich einen Brennraumring 4' mit geprägten Dichtstrukturen, beispielsweise in Form einer Dichtsicke, die um den Innenraum des Brennraumrings 4' vollständig in sich geschlossen umläuft. Figur 1D zeigt eine Glattlage 4". Die beiden Lagen 4' und 4" bilden übereinander gelegt gemeinsam ein Brennraumrauminsert 4, wie es als Brennrauminsert 4a - 4f in Figur 1A dargestellt ist. Beide Lagen 4' und 4" können lose aufeinander liegen oder auch miteinander verbunden sein. Im Falle, dass sie nicht miteinander verbunden sind, werden sie durch die Trägerlage, den Motorblock und den Zylinderkopf jeweils an ihrer Position gehalten.

Figur 1B zeigt einen Querschnitt A - A der Figur 1A im Ausschnitt, der den Bereich zwischen dem Brennrauminsert 4a und der benachbarten Trägerlage 2 abbildet.

Auf der rechten Seite der Zeichnung 1A ist weiterhin eine Öffnung 11 in Form eines Kettenkastens dargestellt. Derartige Kettenkästen sind lediglich optionaler Bestandteil einer Zylinderkopfdichtung.

Zwischen dem Brennrauminsert 4 mit der Glattlage 4" und dem Brennraumring 4' sowie der Trägerlage 2 ist ein Spalt 5 ausgebildet, in den Schleichgase aus der Brennraumöffnung 3a übertreten können. Dieser Spalt weist außerhalb der Verbindungsstelle eine Tiefe auf, die sich aus dem Bereich der Blechdicke ergibt und eine minimale Breite von 500µm aufweist.

Die Trägerlage 2 weist eine Vielzahl von weiteren Durchgangsöffnungen auf, beispielsweise für Schrauben in Form von Schraubenlöchern 6, für Kühlflüssigkeit in Form von Wasserlöchern 7 sowie beispielsweise Ölrückführungsöffnungen 9.

Sämtliche dieser Öffnungen befinden sich bei der Zylinderkopfdichtung 1 der Figur 1A im Bereich zwischen den Brennraumdurchgangsöffnungen 3a - 3f sowie einer Außenkante 8 der Trägerlage 2.

Im vorliegenden Beispiel einer Zylinderkopfdichtung 1 sind beispielsweise die Wasserlöcher 7 mit angespritzten Elastomerdichtungen 10 umgeben, die die Wasserlöcher gegen die benachbarten Bereiche der Zylinderkopfdichtung 1 abdichten. Dadurch wird verhindert, dass Wasser aus den Wasserlöchern 7 in den Spalt zwischen der Trägerlage 2 und dem benachbarten Motorblock oder Zylinderkopf eindringt. In gleicher Weise wird auch verhindert, dass Verunreinigungen aus diesen Spalten in die Wasserlöcher 7 eingetragen werden. Die Elastomerdichtungen 10 können jedoch leicht durch hohen Druck oder Hitze beschädigt oder von der Trägerlage 2 abgelöst werden. Damit würde die gesamte Zylinderkopfdichtung beschädigt.

Es ist unter anderem deshalb erforderlich, zu verhindern, dass Schleichgase, die über die Brennraumringe 4a - 4f aus den Brennraumdurchgangsöffnungen 3a - 3f in einen der Spalte 5a - 5f eintreten, zur Elastomerdichtung 10 gelangen und sie dort beschädigen.

Erfindungsgemäß sind daher in der Trägerlage 2 der erfindungsgemäßen Zylinderkopfdichtung 1 Kanäle 12a - 12f sowie 12a' - 12f' angeordnet, die sich jeweils von einem der Spalte zwischen einem Brennraumring und der Trägerlage bis zur Außenkante 8 der Trägerlage 2 erstrecken.

Figur 1E zeigt einen Querschnitt durch einen derartigen Kanal 12, hier am Beispiel des Kanals 12e. Der Kanal 12e ist als Nut in der Trägerlage 2 ausgebildet. Diese Nut weist eine maximale Tiefe an Nutboden von 0,1 mm und eine Breite zwischen den Nutwänden von 1,5 mm auf. Es handelt sich hier um eine Vertiefung, die zu keiner Erhöhung auf der anderen Oberflächenseite der Trägerlage 2 führt. Durch diesen Kanal 12e können nun Schleichgase aus dem Spalt 5e zur Außenkante 8 der Trägerlage 2 geführt werden um einen hohen Druckaufbau in dem Spalt zwischen dem Brennraumring 4e und der Trägerlage 2 zu verhindern.

Die Kanäle 12a - 12e sowie 12a' - 12e' sind in der kürzesten Verbindungslinie zwischen den Spalten 5a - 5e und der Außenkante 8 geführt. Dasselbe gilt auch für den Kanal 12f' zwischen dem Spalt 5f und der Außenkante 8. Aufgrund der räumlichen Gegebenheiten ist der Kanal 12f ebenfalls in der kürzesten Linie zwischen dem Spalt 5f und der Außenkante 8 geführt, wobei er jedoch im Gegensatz zu den anderen Kanälen nicht geradlinig verläuft, sondern zur Vermeidung von anderen Durchgangsöffnungen in der Trägerlage 2 gekrümmt verläuft.

Damit verläuft keiner der Kanäle 12 a - 12f und 12a' - 12f' durch eine der anderen Durchgangsöffnungen in der Trägerlage 2 und berührt auch keine dieser anderen Durchgangsöffnungen. Die Kanäle 12a - 12f und 12a' - 12f' berühren also lediglich die Spalte 5a-5f.

Die Brennraumringe 4a - 4f sind jeweils an mehreren Anbindepunkten mit der Trägerlage 2 verbunden. An diesen Anbindepunkten werden die Spalte 5a -5f zwischen den Brennraumringen 4a - 4f und der Trägerlage 2 möglicherweise unterbrochen/reduziert in der Höhe, so dass der Gesamtspalt zwischen einem Brennraumring, beispielsweise Brennraumring 4a, und der Trägerlage 2 einzelne Abschnitte aufweist, die gegebenenfalls nicht miteinander verbunden sind. In diesem Falle ist es erforderlich, jeden einzelnen der Abschnitte separat über einen Kanal zu entlüften oder mittels Kanälen die einzelnen Abschnitte miteinander zu verbinden.

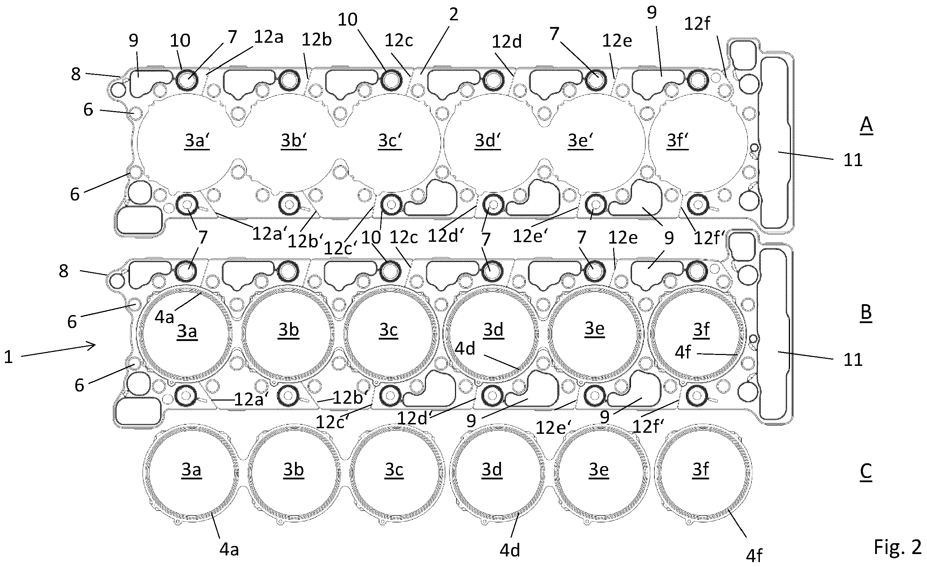

Figur 2 zeigt eine weitere Zylinderkopfdichtung gemäß der vorliegenden Erfindung in drei verschiedenen Teilbildern der Figuren 2A, 2B und 2C. In Figur 2A ist die Trägerlage 2 der Zylinderkopfdichtung 1 dargestellt, jedoch ohne Brennraumabdichtelemente. Die Durchgangsöffnungen 3a', 3b' und 3c' sind in der Trägerlage 2 nunmehr miteinander verbunden und bilden einen gemeinsamen Durchgang aus. Dasselbe gilt für die Durchgangsöffnungen 3d' und 3e', die gemeinsam eine Durchgangsöffnung in Form einer Brille ausbilden. Die Durchgangsöffnung 3f' ist als einzelne Durchgangsöffnung für einen Brennraum ausgebildet.

Figur 2B zeigt Zylinderkopfdichtung 1, mit eingesetzten Brennraumabdichtelementen 4a - 4f.

Figur 2C zeigt die Brennraumabdichtelemente 4a - 4f.

Die Brennraumabdichtelemente 4a, 4b und 4c bilden ein gemeinsames, miteinander verbundenes Brennraumabdichtelement aus, das als solches in die gemeinsame, durch die Durchgangsöffnungen 3a', 3b' und 3c' gebildete Durchgangsöffnung eingesetzt ist. Entsprechendes gilt für das brillenförmige Abdichtelement, das aus Einzelabdichtelementen 4d und 4e in Form eines einzigen zusammenhängenden Abdichtelements gebildet wird, das in die gemeinsame, durch die Durchgangsöffnungen 3d'und 3e' gebildete Durchgangsöffnung eingesetzt ist. Für die Durchgangsöffnung 3f' ist ein einzelnes ringförmiges Brennraumabdichtelement 4f vorgesehen.

Bei der vorliegenden erfindungsgemäßen Zylinderkopfdichtung sind nun wiederum Kanäle 12a - 12f und 12a' - 12f' vorgesehen, die genau so ausgebildet sind wie diejenigen in Figur 1. Dies bedeutet, dass jede einzelne Durchgangsöffnung 3a' - 3f' jeweils zwei Kanäle 12a, 12a' sowie 12b, 12b' usw. aufweist, die den Spalt zwischen den Brennraumringen 4a - 4f und der Trägerlage 2 zur Außenkante 8 entlüften bzw. einen Druckausgleich zwischen dem Spalt und dem Außenraum herstellen.

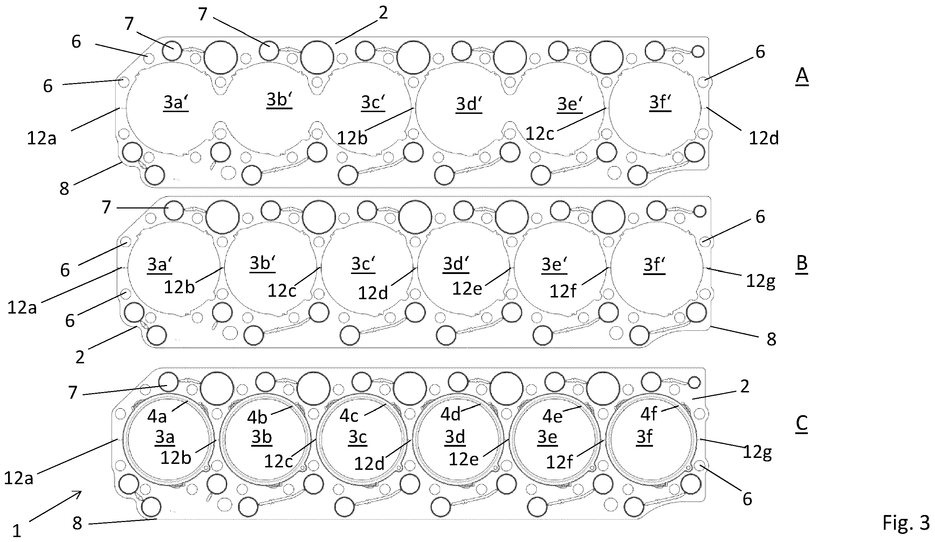

Figur 3 zeigt in den Teilbildern 3A, 3B die Trägerlage zweier verschiedener Zylinderkopfdichtungen und 3C die Trägerlage aus Figur 3B als Zylinderkopfdichtung.

In Figur 3A ist eine Trägerlage 2 dargestellt.

Grundlegend sind die Durchgangsöffnungen 3a' - 3f' so wie in Figur 2A ausgebildet, wobei drei Durchgangsöffnungen 3a' - 3c' miteinander eine gemeinsame Öffnung bilden, zwei Durchgangsöffnungen 3d' und 3e' eine gemeinsame Öffnung bilden und die Durchgangsöffnung 3f' von den anderen Durchgangsöffnungen 3a' - 3e' getrennt eine eigene Öffnung bildet. Im Unterschied zu Figur 2 sind nunmehr jedoch die Kanäle anders ausgebildet. Es ist ein Kanal 12a vorgesehen, der die durch die Durchgangsöffnungen 3a', 3b' und 3c' gebildete Öffnung nach außen zur Außenkante 8 entlüftet. Weiterhin ist ein Kanal 12d vorgesehen, der die Durchgangsöffnung 3f' nach außen zur Außenkante 8 der Trägerlage 2 entlüftet. Zwischen den Öffnungen, die durch die Durchgangsöffnungen 3a', 3b' und 3c', durch die Durchgangsöffnungen 3d' und 3e' sowie durch die Durchgangsöffnung 3f' gebildet werden, sind Kanäle 12b und 12c vorgesehen, sodass zwischen den Spalten, die sich zwischen Brennrauminserts und Trägerlage in den jeweiligen Öffnungen ergeben, ein Druckausgleich stattfindet und beispielsweise Schleichgase aus der Öffnung, die durch die Durchgangsöffnungen 3d' und 3e' gebildet wird, über die benachbarten Öffnungen abgeführt werden können.

Figur 3B zeigt die Trägerlage 2 der Zylinderkopfdichtung 1 aus der Figur 3C ohne die Brennrauminserts 4a - 4f.

In Figur 3C sind die Durchgangsöffnungen 3a' - 3f' jeweils voneinander getrennt und weisen eigene Brennrauminserts 4a - 4f auf. Insofern entspricht diese Zylinderkopfdichtung derjenigen in Figur 1.

Im Unterschied zu der Zylinderkopfdichtung in Figur 1 werden die Kanäle 12a - 12g jedoch anders geführt. Für die Durchgangsöffnung 3a' ist ein Kanal 12a vorgesehen, der den Spalt zwischen dem Brennrauminsert 4a und der Trägerlage 2 zur Außenkante 8 entlüftet. In gleicher Weise wird der Spalt zwischen Brennrauminsert 4f und Trägerlage 2 durch einen Kanal 12g zur Außenkante entlüftet. Zwischen den einzelnen Durchgangsöffnungen 3a' - 3f' befinden sich weitere Kanäle 12b, 12c, 12d und 12e sowie 12f, die jeweils die Spalte zwischen einem Brennrauminsert und der Trägerlage 8 zwischen unmittelbar benachbarten Durchgangsöffnungen 3a' - 3f' miteinander verbinden. Die Spalte der Durchgangsöffnungen 3b' - 3e' werden also letztlich über die Spalte zwischen dem Brennrauminsert 4a und der Außenkante 8 sowie Brennrauminsert 4f und Trägerlage 2 zur Außenkante 8 der Trägerlage 2 entlüftet. Sämtliche Kanäle 12a - 12g verlaufen geradlinig auf dem jeweils kürzesten Weg der zu verbindenden Spalte bzw. Außenkantenbereiche. Dies gilt in gleiche Weise für die Figuren 3A und 3B.

## Patentansprüche

1. Zylinderkopfdichtung (1) mit einer metallischen Trägerlage (2), in der sich mindestens eine Durchgangsöffnung (3) für einen Verbrennungsraum befindet, sowie einem in sich geschlossen verlaufenden Brennraumabdichtelement (4), das in die Durchgangsöffnung (3) eingesetzt ist,
**dadurch gekennzeichnet, dass**
zwischen der Trägerlage (2) und dem Brennraumabdichtelement (4) zumindest abschnittsweise um das Brennraumabdichtelement (4) zumindest abschnittsweise umlaufend mindestens ein Spalt (5) ausgebildet ist, und
die Trägerlage (2) mindestens einen nutförmigen, in die metallische Lage eingeformten Kanal (12), aufweist, der sich von dem mindestens einen Spalt (5) zwischen der Trägerlage (2) und dem Brennraumabdichtelement (4) bis zur Außenkante (8) der Trägerlage (2) erstreckt.

2. Zylinderkopfdichtung (1) nach dem vorhergehenden Anspruch, **dadurch gekennzeichnet, dass** der Kanal (12) in die Trägerlage (2) derart eingepresst ist, dass in dem Kanal (12) die Dicke derTrägerlage (2) verringert wird und die dem Kanal (12) gegenüberliegende Oberfläche der metallischen Trägerlage (2) nicht umgeformt wird.

3. Zylinderkopfdichtung (1) nach einem der vorhergehenden Ansprüche, **dadurch gekennzeichnet, dass** das Brennraumabdichtelement (4) als Dichtring ausgebildet ist.

4. Zylinderkopfdichtung (1) nach einem der vorhergehenden Ansprüche, **dadurch gekennzeichnet, dass** das Brennraumabdichtelement (4) um eine, zwei oder mehrere Durchgangsöffnungen (3a, 3b) umläuft.

5. Zylinderkopfdichtung (1) nach einem der vorhergehenden Ansprüche, **dadurch gekennzeichnet, dass** der Kanal (12) abschnittsweise als Schlitz und/oder Vertiefung mit offenen Längsenden, insbesondere zwischen dem Spalt (5) und der Außenkante (8) der Trägerlage (2) ausschließlich als Vertiefung, ausgebildet ist.

6. Zylinderkopfdichtung (1) nach einem der vorhergehenden Ansprüche, **dadurch gekennzeichnet, dass** der Spalt (5) zwischen Trägerlage (2) und Brennraumabdichtelement (4) zumindest abschnittsweise eine Mindestweite W von mindestens 500 µm, vorteilhafterweise mindestens 1400 µm, vorteilhafterweise 3000 µm aufweist.

7. Zylinderkopfdichtung (1) nach dem vorhergehenden Anspruch, **dadurch gekennzeichnet, dass** der Spalt (5) zumindest abschnittsweise, vorteilhafterweise auf mindestens 50% seiner Länge, vorteilhafterweise auf mindestens 80% seiner Länge in Umfangsrichtung um das Brennraumabdichtelement (4), die Mindestweite W aufweist.

8. Zylinderkopfdichtung (1) nach einem der vorhergehenden Ansprüche, **dadurch gekennzeichnet, dass** der Kanal (12) zwischen dem Spalt (5) und der Außenkante (8) der Trägerlage (2) geradlinig oder ein- oder mehrfach gekrümmt, insbesondere geknickt, verläuft.

9. Zylinderkopfdichtung (1) nach einem der vorhergehenden Ansprüche, **dadurch gekennzeichnet, dass** der Kanal (12) keine weiteren Öffnungen oder Vertiefungen in der Trägerlage (2) berührt oder durch diese hindurchgeht.

10. Zylinderkopfdichtung (1) nach einem der vorhergehenden Ansprüche, **dadurch gekennzeichnet, dass** der Kanal (12) zwischen dem Spalt (5) und der Außenkante (8) der Trägerlage (2) ausschließlich in ansonsten nicht umgeformten Bereichen der Trägerlage (2) verläuft.

## Claims

1. A cylinder head gasket (1) comprising a metallic carrier layer (2), in which at least one through-opening (3) for a combustion chamber is located, and a combustion chamber sealing element (4), which is inserted in the through-opening (3) and extends in a self-contained manner,
**characterized in that**
at least one gap is formed between the carrier layer (2) and the combustion chamber sealing element (4), at least in some sections, said gap (5) extending at least partially around the combustion chamber sealing element (4), and
the carrier layer (2) has at least groove-like channel (12) integrally formed in the metallic layer, which extends from the at least one gap (5) between the carrier layer (2) and the combustion chamber sealing element (4) to the outer edge (8) of the carrier layer (2).

2. The cylinder head gasket (1) according to the preceding claim, **characterized in that** the channel (12) is pressed into the carrier layer (2) in such a way that the thickness of the carrier layer (2) is reduced in the channel (12) and the surface of the metallic carrier layer (2) opposite the channel (12) is not deformed.

3. The cylinder head gasket (1) according to any one of the preceding claims, **characterized in that** the combustion chamber sealing element (4) is configured as a sealing ring.

4. The cylinder head gasket (1) according to any one of the preceding claims, **characterized in that** the combustion chamber sealing element (4) extends around one, two or more through-openings (3a, 3b).

5. The cylinder head gasket (1) according to any one of the preceding claims, **characterized in that** the channel (12) is configured in sections as a slot and/or a depression with open longitudinal ends, in particular is configured exclusively as a depression between the gap (5) and the outer edge (8) of the carrier layer (2).

6. The cylinder head gasket (1) according to any one of the preceding claims, **characterized in that** the gap (5) between the carrier layer (2) and the combustion chamber sealing element (4) has, at least in some sections, a minimum width W of at least 500 µm, advantageously at least 1400 µm, advantageously 3000 µm.

7. The cylinder head gasket (1) according to the preceding claim, **characterized in that** the gap (5) has the minimum width W at least in some sections, advantageously over at least 50% of its length, advantageously over at least 80% of its length in the circumferential direction of the combustion chamber sealing element (4).

8. The cylinder head gasket (1) according to any one of the preceding claims, **characterized in that** the channel (12) between the gap (5) and the outer edge (8) of the carrier layer (2) extends in a straight line or with one or more bends, in particular kinks.

9. The cylinder head gasket (1) according to any one of the preceding claims, **characterized in that** the channel (12) does not touch or pass through any further openings or depressions in the carrier layer (2).

10. The cylinder head gasket (1) according to any one of the preceding claims, **characterized in that** the channel (12) between the gap (5) and the outer edge (8) of the carrier layer (2) extends exclusively in regions of the carrier layer (2) that are otherwise not deformed.

## Revendications

1. Joint de culasse (1) comprenant une couche de support métallique (2) dans laquelle se trouve au moins une ouverture de passage (3) pour une chambre de combustion, ainsi qu'un élément d'étanchéité de chambre de combustion (4) s'étendant de manière fermée annulairement, qui est inséré dans l'ouverture de passage (3),
**caractérisé en ce que**
entre la couche de support (2) et l'élément d'étanchéité (4)
de la chambre de combustion , au moins une fente (5) est formée au moins par sections autour de l'élément d'étanchéité (4)de la chambre de combustion, et
la couche de support (2) présente au moins un canal (12) en forme de rainure, formé dans la couche métallique, qui s'étend depuis l'au moins une fente (5) entre la couche de support (2) et l'élément d'étanchéité (4) de la chambre de combustion jusqu'au bord extérieur (8) de la couche de support (2).

2. Joint de culasse (1) selon la revendication précédente, **caractérisé en ce que** le canal (12) est pressé dans la couche de support (2) de telle sorte que l'épaisseur de la couche de support (2) est réduite dans le canal (12) et que la surface de la couche de support métallique (2) opposée au canal (12) n'est pas déformée.

3. Joint de culasse (1) selon l'une des revendications précédentes, **caractérisé en ce que** l'élément d'étanchéité (4) de la chambre de combustion est réalisé sous forme de joint annulaire.

4. Joint de culasse (1) selon l'une des revendications précédentes, **caractérisé en ce que** l'élément d'étanchéité (4) de la chambre de combustion entourne un, deux ou plusieurs orifices de passage (3a, 3b).

5. Joint de culasse (1) selon l'une des revendications précédentes, **caractérisé en ce que** le canal (12) est réalisé au moins par sections sous la forme d'une fente et/ou d'un renfoncement avec des extrémités longitudinales ouvertes, en particulier entre la fente (5) et le bord extérieur (8) de la couche de support (2) exclusivement sous la forme d'un renfoncement.

6. Joint de culasse (1) selon l'une des revendications précédentes, **caractérisé en ce que** la fente (5) entre la couche de support (2) et l'élément d'étanchéité (4) de la chambre de combustion présente au moins par sections une largeur minimale W d'au moins 500 µm, avantageusement d'au moins 1400 µm, avantageusement de 3000 µm.

7. Joint de culasse (1) selon la revendication précédente, **caractérisé en ce que** la fente (5) présente au moins partiellement, avantageusement sur au moins 50% de sa longueur, avantageusement sur au moins 80% de sa longueur dans la direction circonférentielle autour de l'élément d'étanchéité (4) de la chambre de combustion, la largeur minimale W.

8. Joint de culasse (1) selon l'une des revendications précédentes, **caractérisé en ce que** le canal (12) s'étend entre la fente (5) et le bord extérieur (8) de la couche de support (2) de manière rectiligne ou avec une ou plusieurs courbes, en particulier avec des coudes.

9. Joint de culasse (1) selon l'une des revendications précédentes, **caractérisé en ce que** le canal (12) ne touche pas ou ne traverse pas d'autres ouvertures ou cavités dans la couche de support (2).

10. Joint de culasse (1) selon l'une des revendications précédentes, **caractérisé en ce que** le canal (12) entre la fente (5) et le bord extérieur (8) de la couche de support (2) s'étend exclusivement dans des zones de la couche de support (2) qui ne sont pas déformées par ailleurs.
